(19) Europäisches Patentamt
European Patent Office
Office européen des brevets

(11) **EP 4 715 430 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
***G01S 17/06*** (2006.01)   ***G01S 17/88*** (2006.01)

(21) Application number: **24818264.4**

(52) Cooperative Patent Classification (CPC):
**G01S 17/06; G01S 17/88**

(22) Date of filing: **05.02.2024**

(86) International application number:
**PCT/CN2024/076186**

(87) International publication number:
**WO 2024/250726 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.06.2023 CN 202310659950**

(71) Applicant: **Huawei Technologies Co., Ltd.
Shenzhen, Guangdong 518129 (CN)**

(72) Inventors:
• **WANG, Yaoyuan
  Shenzhen, Guangdong 518129 (CN)**
• **LUO, Wentao
  Shenzhen, Guangdong 518129 (CN)**
• **ZHANG, Ziyang
  Shenzhen, Guangdong 518129 (CN)**
• **YOU, Wei
  Shenzhen, Guangdong 518129 (CN)**
• **ZHOU, Shunbo
  Shenzhen, Guangdong 518129 (CN)**

(74) Representative: **Maiwald GmbH
Elisenhof
Elisenstraße 3
80335 München (DE)**

(54) **POSE ESTIMATION METHOD AND RELATED APPARATUS**

(57)    A pose estimation method and a related apparatus are provided. The method includes: obtaining first sensing data and second sensing data, where the first sensing data is obtained by using a DVS of a mobile apparatus by detecting physical space in which the mobile apparatus is located, and the second sensing data is obtained by using a 2D radar of the mobile apparatus by detecting the physical space in which the mobile apparatus is located; performing feature enhancement on first depth information based on the first sensing data, to obtain second depth information, where the first depth information is obtained by fusing the first sensing data and the second sensing data; and determining a pose of the mobile apparatus based on the second depth information. A characteristic that the radar is not affected by intensity of light in an environment and a characteristic that the DVS is good at capturing information about a dynamic change in the environment are used, and fusion and feature enhancement are performed on the sensing data obtained by using the DVS and the 2D radar, so that in a complex environment, pose estimation accuracy can be improved.

<u>200</u>

210: Obtain first sensing data and second sensing data

220: Perform feature enhancement on first depth information based on the first sensing data, to obtain second depth information, where the first depth information is obtained by fusing the first sensing data and the second sensing data

230: Determine a pose of a mobile apparatus based on the second depth information

FIG. 2

**Description**

This application claims priority to Chinese Patent Application No. 202310659950.4, filed with the China National Intellectual Property Administration on June 5, 2023 and entitled "POSE ESTIMATION METHOD AND RELATED APPARATUS", which is incorporated herein by reference in its entirety.

**TECHNICAL FIELD**

This application relates to the field of vehicle technologies, and in particular, to a pose estimation method and a related apparatus.

**BACKGROUND**

With development of science and technologies, a pose estimation technology is gradually applied to scenarios such as people's life, work, and travel. The pose estimation technology is a technology in which a mobile apparatus (for example, a vehicle or a robot) estimates a pose of the mobile apparatus during movement without prior information of an environment.

Currently, a known pose estimation method is extracting a feature point based on information obtained by a red (red, R), green (green, G), blue (blue, B) (RGB) color sensor and an inertial measurement unit (inertial measurement unit, IMU), and then performing pose estimation based on the feature point. However, in this pose estimation method, in a complex environment (for example, light is excessively strong or light is dim), pose estimation accuracy is not high.

**SUMMARY**

This application provides a pose estimation method and a related apparatus, to improve pose estimation accuracy.

According to a first aspect, this application provides a pose estimation method. The method may be performed by a mobile apparatus, or the method may be performed by a component (for example, a chip or a chip system) configured in the mobile apparatus, or may be implemented by a logical module or software that can implement all or a part of functions of the mobile apparatus. This is not limited in this application.

For example, the method includes: obtaining first sensing data and second sensing data, where the first sensing data is obtained by using a dynamic vision sensor (dynamic vision sensor, DVS) of the mobile apparatus by detecting physical space in which the mobile apparatus is located, and the second sensing data is obtained by using a single-line lidar of the mobile apparatus by detecting the physical space in which the mobile apparatus is located; performing feature enhancement on first depth information based on the first sensing data, to obtain second depth information, where the first depth information is obtained by fusing the first sensing data and the second sensing data; and determining a pose of the mobile apparatus based on the second depth information.

According to the foregoing solution, a characteristic that the radar is not affected by intensity of light in an environment and a characteristic that the DVS is good at capturing information about a dynamic change in the environment are used, and fusion and feature enhancement are performed on the sensing data obtained by using the DVS and the single-line lidar, so that the sensing data obtained by using the DVS and the sensing data obtained by using the single-line lidar complement each other; and regardless of whether in an environment with excessively strong light or in an environment with dim light, the pose of the mobile apparatus can be accurately determined, in other words, in a complex environment, pose estimation accuracy can be improved.

With reference to the first aspect, in some possible implementations, the first depth information includes a plurality of depth values, and performing feature enhancement on the first depth information based on the first sensing data, to obtain the second depth information includes: determining a weight of each of the plurality of depth values based on the first sensing data; and performing feature enhancement on the plurality of depth values based on the weight of each of the plurality of depth values, to obtain the second depth information.

The DVS may capture a motion feature point, in other words, a motion point and an edge point may be highlighted based on the first sensing data obtained by using the DVS. However, in the pose estimation method, the edge point and the motion point are important to pose estimation accuracy. Therefore, weights of the plurality of depth values in the first depth information may be determined based on the first sensing data, to enhance importance of the motion point and the edge point. In a relative sense, this weakens importance of a static point. It may be understood that the second depth information is depth information obtained through feature enhancement performed on the edge point and the motion point based on the first depth information. This facilitates subsequent key feature extraction and feature alignment, and further helps improve pose estimation accuracy.

With reference to the first aspect, in some possible implementations, the first sensing data is one of one or more groups of first-type sensing data obtained by using the DVS by detecting the physical space in which the mobile apparatus is located, and the second sensing data is one of one or more groups of second-type sensing data obtained by using the single-line lidar by detecting the physical space in which the mobile apparatus is located; and determining the pose of the mobile apparatus based on the second depth information includes: when the second depth information is key depth information, and the second depth information is valid depth information or rich depth information, determining the pose of the mobile apparatus based on the second depth information, where the key depth information is second depth information whose difference from a previous group of second depth information is greater than a first threshold, the previous group of second depth information is obtained by performing feature enhancement on a previous group of first depth information based on a previous group of first sensing data, the previous group of first depth information is obtained by fusing the previous group of first sensing data and a previous group of second sensing data, a ratio of a quantity of key feature points included in the valid depth information to a total quantity of feature points is greater than or equal to a second threshold and is less than or equal to a third threshold, a ratio of a quantity of key feature points included in the rich depth information to the total quantity of feature points is greater than the third threshold, and the key feature point is a feature point whose average value of a difference between pixel values of the key feature point and a surrounding feature point is greater than or equal to a fourth threshold.

With reference to the first aspect, in some possible implementations, when the second depth information is the key depth information, and the second depth information is the valid depth information or the rich depth information, determining the pose of the mobile apparatus based on the second depth information includes: when the second depth information is the key depth information, and the second depth information is the valid depth information or the rich depth information, obtaining image-level pose information based on the second depth information, where the image-level pose information is conversion information between the second depth information and a previous group of valid depth information or rich depth information, and the previous group of valid depth information or rich depth information is determined based on the previous group of second depth information; obtaining feature-level position information based on the image-level pose information, where the feature-level position information is position information obtained through feature alignment performed on a feature point in the second depth information based on a feature point in the previous group of valid depth information or rich depth information; and determining the pose of the mobile apparatus based on the feature-level position information.

With reference to the first aspect, in some possible implementations, the method may further include: when the second depth information is the key depth information, and the second depth information is invalid depth information, increasing a frequency of detecting, by the single-line lidar and/or the DVS, the physical space in which the mobile apparatus is located, where a ratio of a quantity of key feature points included in the invalid depth information to the total quantity of feature points is less than the second threshold, and the key feature point is a feature point whose average value of a difference between pixel values of the key feature point and the surrounding feature point is greater than or equal to the fourth threshold.

When the second depth information is the key depth information, and the second depth information is the invalid depth information, it may be considered that richness of sensing data obtained based on current frequencies of the single-line lidar and the DVS is insufficient, and analysis and processing based on the data may not reach expected pose estimation accuracy. In this case, the mobile apparatus may increase the frequency of detecting, by the single-line lidar and/or the DVS, the physical space in which the mobile apparatus is located, to obtain richer sensing data. This helps improve pose estimation accuracy.

With reference to the first aspect, in some possible implementations, the method may further include: when the second depth information is the key depth information, and the second depth information is the rich depth information, decreasing the frequency of detecting, by the single-line lidar and/or the DVS, the physical space in which the mobile apparatus is located, where the ratio of the quantity of key feature points included in the rich depth information to the total quantity of feature points is greater than the third threshold, and the key feature point is the feature point whose average value of the difference between the pixel values of the key feature point and the surrounding feature point is greater than or equal to the fourth threshold.

When the second depth information is the key depth information, and the second depth information is the rich depth information, it may be considered that richness of sensing data obtained based on current frequencies of the single-line lidar and the DVS is high, and analysis and processing based on the data can reach expected pose estimation accuracy. However, when the frequency of detecting the physical space in which the mobile apparatus is located is excessively high, power consumption of the single-line lidar and the DVS is also high, and therefore power consumption of the mobile apparatus is increased. When high accuracy can be ensured, the frequency of detecting, by the single-line lidar and/or the DVS, the physical space in which the mobile apparatus is located may be appropriately decreased, thereby helping reduce power consumption of the mobile apparatus, and improve a battery life of the mobile apparatus.

According to a second aspect, this application provides a mobile apparatus. The mobile apparatus includes a DVS, a single-line lidar, and a processor. The DVS is configured to detect physical space in which the mobile apparatus is located, to obtain first sensing data; the single-line lidar is configured to detect the physical space in which the mobile apparatus is located, to obtain second sensing data; and the processor is configured to: perform feature enhancement on first depth information based on the first sensing data, to obtain second depth information, where the first depth information is obtained by fusing the first sensing data and the second sensing data; and determine a pose of the mobile apparatus based on the second depth information.

According to the foregoing solution, a characteristic that the radar is not affected by intensity of light in an environment and a characteristic that the DVS is good at capturing information about a dynamic change in the environment are used; and the mobile apparatus obtains the sensing data by using the DVS and the single-line lidar, and performs fusion and feature enhancement on the sensing data obtained by using the DVS and the single-line lidar, so that the sensing data obtained by using the DVS and the sensing data obtained by using the single-line lidar complement each other; and even in a complex environment, pose estimation accuracy can be improved. In addition, the single-line lidar is with lower costs than a multi-line lidar. Deploying the single-line lidar on the mobile apparatus saves costs than deploying the multi-line lidar. Correspondingly, a market price of the mobile apparatus deployed with the single-line lidar is lower. Therefore, the mobile apparatus deployed with the single-line lidar may have a wider audience and broader applicability.

With reference to the second aspect, in some possible implementations, the first depth information includes a plurality of depth values, and the processor may be specifically configured to: determine a weight of each of the plurality of depth values based on the first sensing data; and perform feature enhancement on the plurality of depth values based on the weight of each of the plurality of depth values, to obtain the second depth information.

The DVS may capture a motion feature point, in other words, a motion point and an edge point may be highlighted based on the first sensing data obtained by using the DVS. However, in the pose estimation method, the edge point and the motion point are important to pose estimation accuracy. Therefore, weights of the plurality of depth values in the first depth information may be determined based on the first sensing data, to enhance importance of the motion point and the edge point. In a relative sense, this weakens importance of a static point. It may be understood that the second depth information is depth information obtained through feature enhancement performed on the edge point and the motion point based on the first depth information. This facilitates subsequent key feature extraction and feature alignment, and further helps improve pose estimation accuracy.

With reference to the second aspect, in some possible implementations, the first sensing data is one of one or more groups of first-type sensing data obtained by using the DVS by detecting the physical space in which the mobile apparatus is located, and the second sensing data is one of one or more groups of second-type sensing data obtained by using the single-line lidar by detecting the physical space in which the mobile apparatus is located; and the processor may be specifically configured to: when the second depth information is key depth information, and the second depth information is valid depth information or rich depth information, determine the pose of the mobile apparatus based on the second depth information, where the key depth information is second depth information whose difference from a previous group of second depth information is greater than a first threshold, the previous group of second depth information is obtained by performing feature enhancement on a previous group of first depth information based on a previous group of first sensing data, the previous group of first depth information is obtained by fusing the previous group of first sensing data and a previous group of second sensing data, a ratio of a quantity of key feature points included in the valid depth information to a total quantity of feature points is greater than or equal to a second threshold and is less than or equal to a third threshold, a ratio of a quantity of key feature points included in the rich depth information to the total quantity of feature points is greater than the third threshold, and the key feature point is a feature point whose average value of a difference between pixel values of the key feature point and a surrounding feature point is greater than or equal to a fourth threshold.

With reference to the second aspect, in some possible implementations, the processor may be specifically configured to: when the second depth information is the key depth information, and the second depth information is the valid depth information or the rich depth information, obtain image-level pose information based on the second depth information, where the image-level pose information is conversion information between the second depth information and a previous group of valid depth information or rich depth information, and the previous group of valid depth information or rich depth information is determined based on the previous group of second depth information; obtain feature-level position information based on the image-level pose information, where the feature-level position information is position information obtained through feature alignment performed on a feature point in the second depth information based on a feature point in the previous group of valid depth information or rich depth information; and determine the pose of the mobile apparatus based on the feature-level position information.

With reference to the second aspect, in some possible implementations, the processor may be further configured to: when the second depth information is the key depth information, and the second depth information is invalid depth information, send a first instruction to the single-line lidar and/or the DVS, where the first instruction indicates to increase a frequency of detecting the physical space in which the mobile apparatus is located, a ratio of a quantity of key feature points included in the invalid depth information to the total quantity of feature points is less than the second threshold, and the key feature point is a feature point whose average value of a difference between pixel values of the key feature point and the surrounding feature point is greater than or equal to the fourth threshold.

When the second depth information is the key depth information, and the second depth information is the invalid depth information, it may be considered that richness of sensing data obtained based on current frequencies of the single-line lidar and the DVS is insufficient, and analysis and processing based on the data may not reach expected pose estimation accuracy. In this case, the processor may control the single-line lidar and/or the DVS to increase the frequency of detecting the physical space in which the mobile apparatus is located, to obtain richer sensing data. This helps improve pose estimation accuracy.

With reference to the second aspect, in some possible implementations, the processor may be further configured to: when the second depth information is the key depth information, and the second depth information is the invalid depth information, send a second instruction to the single-line lidar and/or the DVS, where the second instruction indicates to decrease the frequency of detecting the physical space in which the mobile apparatus is located, the ratio of the quantity of key feature points included in the rich depth information to the total quantity of feature points is greater than the third threshold, and the key feature point is the feature point whose average value of the difference between the pixel values of the key feature point and the surrounding feature point is greater than or equal to the fourth threshold.

When the second depth information is the key depth information, and the second depth information is the rich depth information, it may be considered that richness of sensing data obtained based on current frequencies of the single-line lidar and the DVS is high, and analysis and processing based on the data can reach expected pose estimation accuracy. However, when the frequency of detecting the physical space in which the mobile apparatus is located is excessively high, power consumption of the single-line lidar and the DVS is also high, and therefore power consumption of the mobile apparatus is increased. When high accuracy can be ensured, the processor may control the single-line lidar and/or the DVS to appropriately decrease the frequency of detecting the physical space in which the mobile apparatus is located, thereby helping reduce power consumption of the mobile apparatus, and improve a battery life of the mobile apparatus.

With reference to the second aspect, in some possible implementations, the mobile apparatus may further include a memory, and the memory is configured to store a computer program invoked and executed by the processor.

Optionally, the processor is coupled to the memory.

According to a third aspect, this application provides a radar. The radar is configured to: after receiving a first instruction, increase, based on the first instruction, a frequency of detecting physical space in which the radar is located; and/or after receiving a second instruction, decrease, based on the second instruction, the frequency of detecting the physical space in which the radar is located.

Increasing the frequency helps obtain richer sensing data, and decreasing the frequency helps reduce power consumption.

According to a fourth aspect, this application provides a DVS. The DVS is configured to: after receiving a first instruction, increase, based on the first instruction, a frequency of detecting physical space in which the DVS is located; and/or after receiving a second instruction, decrease, based on the second instruction, the frequency of detecting the physical space in which the DVS is located.

Increasing the frequency helps obtain richer sensing data, and decreasing the frequency helps reduce power consumption.

According to a fifth aspect, this application provides a mobile apparatus. The mobile apparatus may be configured to implement the method according to any one of the first aspect and the possible implementations of the first aspect. The mobile apparatus includes a corresponding module configured to perform the foregoing method. The module included in the mobile apparatus may be implemented by software and/or hardware.

According to a sixth aspect, this application provides a chip system. The chip system includes a processor, configured to support implementation of the function according to any one of the first aspect and the possible implementations of the first aspect, for example, processing the sensing data in the foregoing method.

In a possible design, the chip system further includes a memory. The memory is configured to store program instructions and data. The memory is located inside the processor or outside the processor.

The chip system may include a chip, or may include a chip and another discrete component.

According to a seventh aspect, this application provides a computer-readable storage medium. The computer storage medium stores a computer program (which may also be referred to as code or instructions). When the computer program is run by a computer, the method according to any one of the first aspect and the possible implementations of the first aspect is performed.

According to an eighth aspect, this application provides a computer program product. The computer program product includes: a computer program (which may also be referred to as code or instructions). When the computer program is run, the method according to any one of the first aspect and the possible implementations of the first aspect is performed.

It should be understood that the fifth aspect to the eighth aspect of this application correspond to the technical solutions of the first aspect and the second aspect of this application, and that beneficial effect achieved in the aspects and corresponding feasible implementations are similar. Details are not described again.

## BRIEF DESCRIPTION OF DRAWINGS

FIG. 1 is a block diagram of a mobile apparatus applicable to a pose estimation method according to an embodiment of this application;

FIG. 2 is a schematic flowchart of a pose estimation method according to an embodiment of this application;

FIG. 3 is a diagram of feature points at different positions according to an embodiment of this application;

FIG. 4 is a diagram of image-level feature alignment according to an embodiment of this application;

FIG. 5 is a diagram of feature-level alignment according to an embodiment of this application;

FIG. 6 is another schematic flowchart of a pose estimation method according to an embodiment of this application; and

FIG. 7 is another block diagram of a mobile apparatus applicable to a pose estimation method according to an embodiment of this application.

## DESCRIPTION OF EMBODIMENTS

The following describes technical solutions of this application with reference to accompanying drawings.

For ease of clearly describing the technical solutions in embodiments of this application, the following descriptions are first made.

First, in embodiments of this application, descriptions such as "when...", "in a case in which...", "if", and "it is assumed that" all mean that a mobile apparatus (for example, a vehicle) performs corresponding processing in an objective case, are not intended to limit time, do not require the apparatus to necessarily have a determining action during implementation, and do not mean that there is another limitation. It should be noted that, in embodiments of this application, the foregoing several descriptions may be interchangeably used. This is not limited herein.

Second, in embodiments of this application, the terms "include", "have", and any other variants thereof are intended to cover a non-exclusive inclusion. For example, an apparatus, a system, a product, or a device that includes a series of assemblies, modules, or units is not necessarily limited to those assemblies, modules, or units that are expressly listed, but may include other assemblies, modules, or units that are not expressly listed or are inherent to such an apparatus, a system, a product, or a device.

Third, in embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" usually represents an "or" relationship between associated objects, but does not exclude an "and" relationship between the associated objects. A specific meaning represented by the character "/" may be understood with reference to the context.

Fourth, in embodiments of this application, the term such as "example" or "for example" is used to represent giving an example, an illustration, or a description. Any embodiment or design solution described as "example" or "for example" in embodiments of this application should not be explained as being more preferred or having more advantages than another embodiment or design solution. Exactly, the term "example", "for example", or the like is intended to present a related concept in a specific manner.

Fifth, in embodiments of this application, words such as "first", "second", and "third" are used to distinguish between same items or similar items that provide basically same functions or purposes. For example, first depth information and second depth information are used to distinguish between different depth information, a first threshold, a second threshold, and a third threshold are used to distinguish between different thresholds, and a first instruction and a second instruction are used to distinguish between different instructions; and these are not intended to limit a sequence thereof. A person skilled in the art may understand that the words such as "first", "second", and "third" do not limit a quantity and an execution sequence, and the words such as "first", "second", and "third" do not indicate a definite difference.

Sixth, in embodiments of this application, presetting may be understood as predefining, defining, defining in advance, storing, pre-storing, pre-negotiation, pre-configuration, or the like.

Terms in this application are briefly described below.

1. Depth information: may be a depth of an image scene, and the depth information may represent a distance between a target and a sensing device, namely, a relative distance. The depth information may be represented by a depth map, and the depth map may be an image in which a depth (distance) value from a visual sensor to each point in a scene is used as a pixel value. For example, the depth information (or the depth map) may be obtained by using a camera or a depth sensor (for example, including directly using an active light technology (a lidar, structured light, or the like)); or may be obtained by using a binocular camera, a multi-lens camera, a binocular visual sensor, or a multi-lens visual sensor, and by using a binocular or multi-lens matching algorithm. In other words, the depth information may be obtained by using both a camera and a sensor such as a millimeter wave radar or a lidar. A specific manner of obtaining the depth information is not limited in this application. In this application, the depth information may also be referred to as a depth value.

2. Pixel (pixel): namely, a pixel point, is a small block of an image represented by a digital sequence (a small grid is an image element). Each of these small blocks has a specific position and an allocated value. In this application, a value corresponding to each small block may be denoted as a pixel value, and the pixel value in this application may include depth information corresponding to a pixel point.

3. Pose: may be a position and a posture (or an orientation).

4. Single-line lidar: is a radar whose beam emitted by a laser source is a single-line radar, and may also be referred to as a two-dimensional (2 dimensions, 2D) radar. The single-line lidar, divided according to a principle, may include a triangulation lidar and a time of flight (time of flight, TOF) lidar.

With development of science and technologies, a pose estimation technology is gradually applied to scenarios such as people's life, work, and travel. The pose estimation technology is a technology in which a mobile apparatus (for example, a vehicle or a robot) estimates a pose of the mobile apparatus during movement without prior information of an environment. Currently, a known pose estimation method is extracting a feature point based on information obtained by an RGB color sensor and an IMU, and then performing pose estimation based on the feature point. However, in this pose estimation method, in a complex environment (for example, light is excessively strong or light is dim), pose estimation accuracy is not high.

Based on the foregoing problem, this application provides a pose estimation method and a related apparatus. A characteristic that a radar is not affected by intensity of light in an environment and a characteristic that a DVS is good at capturing information about a dynamic change in the environment are used; and fusion and feature enhancement are performed on sensing data obtained by using the DVS and a 2D radar, so that a pose is estimated based on data obtained through feature enhancement, to overcome impact caused by a complex environment, and improve pose estimation accuracy.

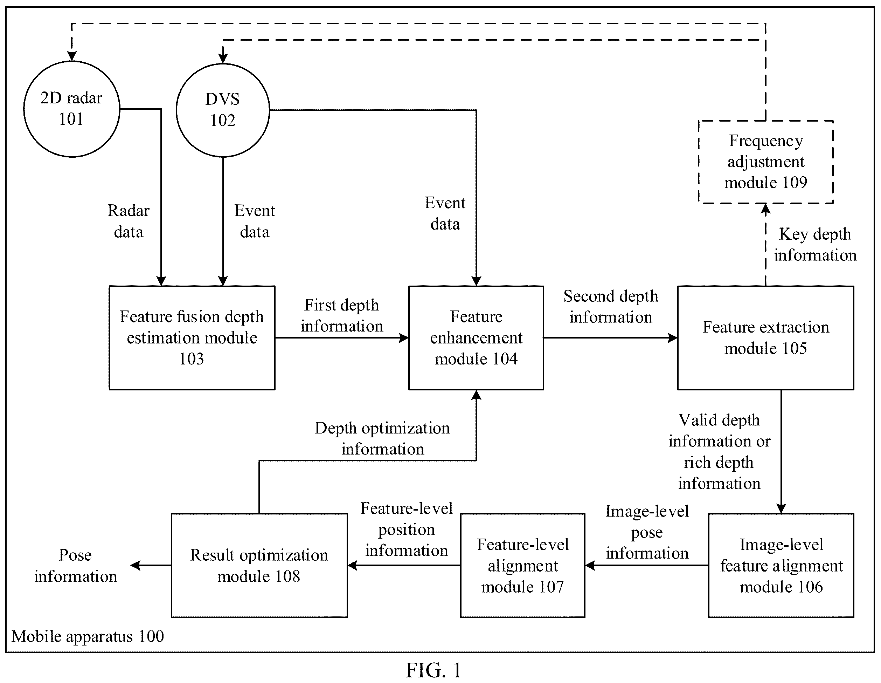

Before the pose estimation method provided in embodiments of this application is described in detail below, a mobile apparatus applicable to embodiments of this application is first described as an example with reference to FIG. 1. The mobile apparatus may include, for example, but is not limited to, a vehicle or a robot.

FIG. 1 is a block diagram of a mobile apparatus applicable to a pose estimation method according to an embodiment of this application.

As shown in FIG. 1, the mobile apparatus 100 may include a 2D radar 101, a DVS 102, a feature fusion depth estimation module 103, a feature enhancement module 104, a feature extraction module 105, an image-level feature alignment module 106, a feature-level alignment module 107, and a result optimization module 108.

The 2D radar 101 and the DVS 102 may be configured to obtain sensing data. For example, the DVS 102 may be configured to detect physical space in which the mobile apparatus 100 is located, to obtain first sensing data (which may also be denoted as event data); and the 2D radar may be configured to detect the physical space in which the mobile apparatus 100 is located, to obtain second sensing data (which may also be denoted as radar data).

The feature fusion depth estimation module 103 may be configured to fuse the radar data and the event data, to obtain first depth information.

The feature enhancement module 104 may be configured to perform feature enhancement on the first depth information, to obtain second depth information.

The feature extraction module 105 may be configured to analyze the second depth information, and determine whether the second depth information is key depth information. When the second depth information is the key depth information, the feature extraction module 105 may further determine a type corresponding to the second depth information. The type corresponding to the second depth information may include valid depth information, rich depth information, and invalid depth information.

The image-level feature alignment module 106 may be configured to: when the second depth information is the key depth information, and the second depth information is the valid depth information or the rich depth information, process the second depth information, to obtain image-level pose information.

The feature-level alignment module 107 may be configured to obtain feature-level position information based on the image-level pose information.

The result optimization module 108 may be configured to obtain pose information of the mobile apparatus 100 based on the feature-level position information, that is, determine a pose of the mobile apparatus 100. The result optimization module 108 may be further configured to obtain depth optimization information, and feed back the depth optimization information to the feature enhancement module 104, so that the feature enhancement module 104 can subsequently obtain more accurate second depth information.

In some embodiments, the mobile apparatus 100 may further include a frequency adjustment module 109. The frequency adjustment module 109 may be configured to: when the second depth information is the key depth information, and the second depth information is the invalid depth information, send a first instruction to the 2D radar, to indicate the 2D radar to increase a frequency of detecting the physical space in which the mobile apparatus 100 is located, so that the 2D radar can obtain richer radar data, which helps improve pose estimation accuracy; and/or when the second depth information is the key depth information, and the second depth information is the rich depth information, send a second instruction to the 2D radar, to indicate the 2D radar to decrease the frequency of detecting the physical space in which the mobile apparatus 100 is located, so that power consumption of the 2D radar can be reduced.

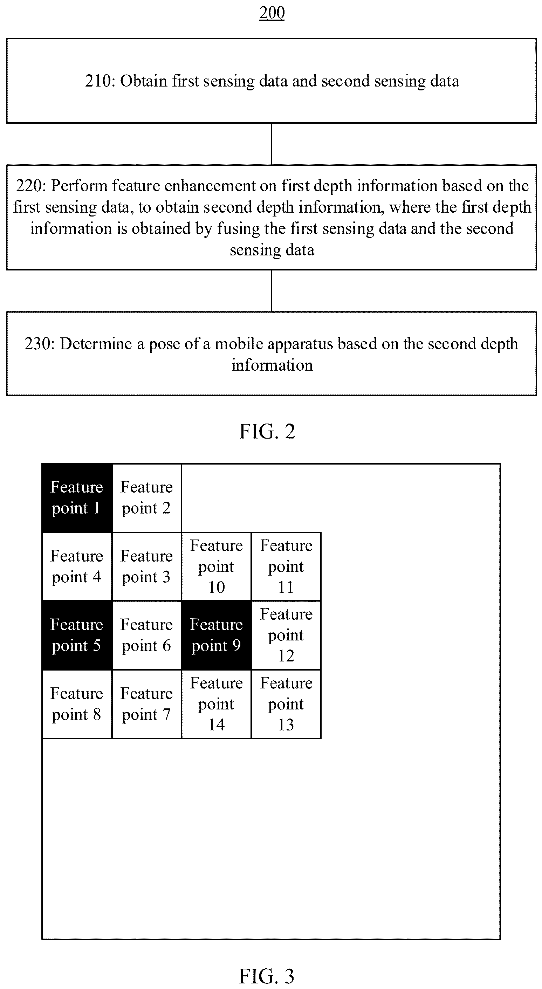

The following describes a pose estimation method provided in this application with reference to FIG. 2.

FIG. 2 is a schematic flowchart of a pose estimation method according to an embodiment of this application.

As shown in FIG. 2, the method 200 may include step 210 to step 230. Steps of the method 200 may be performed by a mobile apparatus configured with a 2D radar and a DVS (For ease of description, the mobile apparatus configured with the 2D radar and the DVS is a mobile apparatus for short in this application). Alternatively, the method 200 may be performed by a component (for example, a chip or a chip system) configured in the mobile apparatus, or may be implemented by a logical module or software that can implement all or some functions of the mobile apparatus. This is not limited in this embodiment of this application. By way of an example but not a limitation, the mobile apparatus may include but is not limited to a robot, a vehicle, or the like.

The following describes in detail the steps in FIG. 2.

Step 210: Obtain first sensing data and second sensing data.

The first sensing data is obtained by using the DVS of the mobile apparatus by detecting physical space in which the mobile apparatus is located, and the second sensing data is obtained by using the 2D radar of the mobile apparatus by detecting the physical space in which the mobile apparatus is located.

The mobile apparatus may detect, by using the DVS, the physical space in which the mobile apparatus is located, to obtain the first sensing data. It may be understood that the DVS may capture information about a dynamic change in a scenario in an event-driven manner. In a process in which the mobile apparatus configured with the DVS continuously moves, an object in the physical space in which the mobile apparatus is located keeps changing relative to the mobile apparatus, and the DVS may capture motion feature points. These motion feature points may also be referred to as events. Therefore, the first sensing data may also be referred to as event data.

By way of an example but not a limitation, an event may include (t, x, y, p), where "x, y" may represent pixel coordinates of the event in 2D space, "t" may represent a timestamp of the event, and "p" may represent a polarity of the event. By way of an example but not a limitation, for example, when p=1, it may indicate that the event is an acceleration event, that is, the motion feature point is an acceleration point; when p=-1, it may indicate that the event is a deceleration event, that is, the motion feature point is a deceleration point; or when p=0, it may indicate that the event is a static event, that is, the motion feature point is a static point. This is not limited in this application.

The mobile apparatus may detect, by using the 2D radar, the physical space in which the mobile apparatus is located, to obtain the second sensing data. The second sensing data includes but is not limited to sensing data obtained based on a triangulation lidar or a TOF lidar.

In a possible design, both the DVS and the 2D radar can obtain the sensing data based on a preset frequency. For example, the DVS may obtain the first sensing data based on a first frequency, and the first frequency may be, for example, a frequency preset when the DVS is delivered from a factory; and the 2D radar may obtain the second sensing data based on a second frequency, and the second frequency may be, for example, a frequency preset when the 2D radar is delivered from a factory. The first frequency and the second frequency may be equal or not equal. This is not limited in this application. In this specification, for ease of understanding and description, sensing data obtained by the DVS and the 2D radar each time based on respective frequencies is denoted as a group of sensing data. In other words, the first sensing data may be one of one or more groups of sensing data obtained by the DVS, and the second sensing data may be one of one or more groups of sensing data obtained by the 2D radar. For ease of differentiation, the sensing data obtained by the DVS is denoted as first-type sensing data, and the sensing data obtained by the 2D radar is denoted as second-type sensing data. Therefore, the first sensing data may be one of one or more groups of first-type sensing data, and the second sensing data may be one of one or more groups of second-type sensing data.

Step 220: Perform feature enhancement on first depth information based on the first sensing data, to obtain second depth information, where the first depth information is obtained by fusing the first sensing data and the second sensing data.

After obtaining the first sensing data and the second sensing data, the mobile apparatus may analyze and process the first sensing data and the second sensing data.

For example, the mobile apparatus may first perform timestamp alignment on the first sensing data and the second sensing data.

By way of an example but not a limitation, performing timestamp alignment may include but is not limited to: using sensing data obtained by a sensor with a lower frequency as a reference, and finding, for timestamps in the sensing data obtained by the sensor with the lower frequency, data corresponding to timestamps, closest to the timestamps, in sensing data obtained by another sensor. For example, when the first frequency is greater than the second frequency, the mobile apparatus may use the second sensing data obtained at the second frequency as a reference, find, in the first sensing data, timestamps closest to timestamps in the second sensing data, and further find data corresponding to these timestamps.

Second, the mobile apparatus may fuse the data corresponding to these timestamps with the second sensing data, to obtain the first depth information.

It may be understood that when the second frequency is greater than or equal to the first frequency, the mobile apparatus may perform timestamp alignment by using the first sensing data obtained at the first frequency as a reference. For brevity, details are not described herein again.

After obtaining the first depth information, the mobile apparatus may perform feature enhancement on the first depth information based on the first sensing data, to obtain the second depth information.

In other words, the second depth information is information obtained by performing feature enhancement on the first depth information.

In some embodiments, the first depth information includes a plurality of depth values, and performing feature enhancement on the first depth information based on the first sensing data, to obtain the second depth information includes: determining a weight of each of the plurality of depth values based on the first sensing data; and performing feature enhancement on the plurality of depth values based on the weight of each of the plurality of depth values, to obtain the second depth information.

As described above, the DVS may capture a motion feature point, in other words, a motion point and an edge point may be highlighted based on the first sensing data obtained by using the DVS. However, in the pose estimation method, the edge point and the motion point are important to pose estimation accuracy. Therefore, weights of the plurality of depth values in the first depth information may be determined based on the first sensing data, to enhance importance of the motion point and the edge point. In a relative sense, this weakens importance of a static point.

By way of an example but not a limitation, the mobile apparatus may input the first sensing data and the first depth information into an attention model, use the first sensing data as attention, determine the weights of the plurality of depth values in the first depth information, and filter the first depth information based on the weights of the plurality of depth values, to enhance importance of the motion point and the edge point, and finally obtain the second depth information. It may be understood that the second depth information is depth information obtained through feature enhancement performed on the edge point and the motion point based on the first depth information. This facilitates subsequent key feature extraction and feature alignment, and further helps improve pose estimation accuracy.

By way of an example but not a limitation, in some possible implementations, importance of the static point may alternatively be weakened, to achieve relatively enhanced importance of the motion point and the edge point. This is not limited in this application.

Specific data forms of the first depth information and the second depth information are not limited in this application. By way of an example but not a limitation, the first depth information and the second depth information may be data in a matrix form.

Step 230: Determine a pose of the mobile apparatus based on the second depth information.

After obtaining the second depth information, the mobile apparatus may analyze the second depth information, to determine a position and a posture of the mobile apparatus.

In some embodiments, determining the pose of the mobile apparatus based on the second depth information includes: when the second depth information is key depth information, and the second depth information is valid depth information or rich depth information, determining the pose of the mobile apparatus based on the second depth information, where the key depth information is second depth information whose difference from a previous group of second depth information is greater than a first threshold, the previous group of second depth information is obtained by performing feature enhancement on a previous group of first depth information based on a previous group of first sensing data, the previous group of first depth information is obtained by fusing the previous group of first sensing data and a previous group of second sensing data, a ratio of a quantity of key feature points included in the valid depth information to a total quantity of feature points is greater than or equal to a second threshold and is less than or equal to a third threshold, a ratio of a quantity of key feature points included in the rich depth information to the total quantity of feature points is greater than the third threshold, and the key feature point is a feature point whose average value of a difference between pixel values of the key feature point and a surrounding feature point is greater than or equal to a fourth threshold.

The first threshold, the second threshold, the third threshold, and the fourth threshold may be preset thresholds. This is not limited in this application.

As described above, both the DVS and the 2D radar can obtain the sensing data based on a preset frequency. A frequency at which the mobile apparatus calculates the second depth information may be equal to a frequency corresponding to a sensor with a low frequency in the DVS and the 2D radar. For example, when the first frequency is greater than the second frequency, the mobile apparatus may obtain one group of second depth information through calculation each time the 2D radar obtains one group of second sensing data.

After obtaining one group of second depth information, the mobile apparatus may first determine whether the group of second depth information is key depth information. In a possible implementation, when a difference between the group of second depth information and a previous group of second depth information is greater than the first threshold, the group of second depth information may be determined as the key depth information.

It may be understood that, in an actual application scenario, a first group of second depth information obtained through calculation each time the mobile apparatus is powered on may be considered by default as key depth information, or the first group of second depth information obtained through calculation each time the mobile apparatus is started may be considered by default as non-key depth information. This is not limited in this application.

When the group of second depth information is the key depth information, the mobile apparatus may further determine whether the group of second depth information is valid depth information or rich depth information. When the group of second depth information is the non-key depth information, the mobile apparatus may not perform subsequent analysis and processing on the group of second depth information.

When the group of second depth information is the key depth information, the mobile apparatus may first determine a key feature point based on the second depth information. The key feature point is a feature point whose average value of a difference between pixel values of the feature point and a surrounding feature point is greater than or equal to the fourth threshold. In other words, when an average value of a difference between a pixel value of a specific feature point and a pixel value of a surrounding feature point of the specific feature point is greater than or equal to the fourth threshold, the feature point may be determined as the key feature point.

To better understand the key feature point, the following describes the key feature point with reference to FIG. 3.

FIG. 3 is a diagram of feature points at different positions according to an embodiment of this application.

A first feature point is used as an example. As shown in FIG. 3, when the first feature point is a corner point, for example, when the first feature point is a feature point 1, surrounding feature points of the feature point 1 may include a feature point 2, a feature point 3, and a feature point 4. When an average value of differences between pixel values of the feature point 1 and the feature point 2, the feature point 3, and the feature point 4 is greater than or equal to the fourth threshold, the feature point 1 is the key feature point. When the average value of the differences between the pixel values of the feature point 1 and the feature point 2, the feature point 3, and the feature point 4 is less than the fourth threshold, the feature point 1 is not the key feature point.

When the first feature point is an edge point, for example, when the first feature point is a feature point 5, surrounding feature points of the feature point 5 may include a feature point 3, a feature point 4, a feature point 6, a feature point 7, and a feature point 8. When an average value of differences between pixel values of the feature point 5 and the feature point 3, the feature point 4, the feature point 6, the feature point 7, and the feature point 8 is greater than or equal to the fourth threshold, the feature point 5 is the key feature point. When the average value of the differences between the pixel values of the feature point 5 and the feature point 3, the feature point 4, the feature point 6, the feature point 7, and the feature point 8 is less than the fourth threshold, the feature point 5 is not the key feature point.

When the first feature point is an intermediate point (that is, the first feature point is not a corner point or an edge point), for example, when the first feature point is a feature point 9, surrounding feature points of the feature point 9 may include a feature point 3, a feature point 6, a feature point 7, a feature point 10, a feature point 11, a feature point 12, a feature point 13, and a feature point 14. When an average value of differences between pixel values of the feature point 9 and the feature point 3, the feature point 6, the feature point 7, the feature point 10, the feature point 11, the feature point 12, the feature point 13, and the feature point 14 is greater than or equal to the fourth threshold, the feature point 9 is the key feature point. When the average value of the differences between the pixel values of the feature point 9 and the feature point 3, the feature point 6, the feature point 7, the feature point 10, the feature point 11, the feature point 12, the feature point 13, and the feature point 14 is less than the fourth threshold, the feature point 9 is not the key feature point.

After determining the key feature point, the mobile apparatus may determine, based on a quantity of key feature points, whether the second depth information is the valid depth information or the rich depth information.

By way of an example but not a limitation, when a ratio of a quantity of key feature points included in the second depth information to a total quantity of feature points included in the second depth information is greater than or equal to the second threshold and less than or equal to the third threshold, the second depth information may be determined as the valid depth information. When the ratio of the quantity of key feature points included in the second depth information to the total quantity of feature points included in the second depth information is greater than the third threshold, the second depth information may be determined as the rich depth information. When the ratio of the quantity of key feature points included in the second depth information to the total quantity of feature points included in the second depth information is less than the second threshold, the second depth information may be determined as the invalid depth information.

When the second depth information is the valid depth information or the rich depth information, the mobile apparatus may determine the pose of the mobile apparatus based on the second depth information. When the second depth information is the invalid depth information, the mobile apparatus may not perform subsequent analysis and processing on the second depth information.

In this application, one feature point may include at least one pixel point.

In some embodiments, when the second depth information is the key depth information, and the second depth information is the valid depth information or the rich depth information, determining the pose of the mobile apparatus based on the second depth information includes: when the second depth information is the key depth information, and the second depth information is the valid depth information or the rich depth information, obtaining image-level pose information based on the second depth information, where the image-level pose information is conversion information between the second depth information and a previous group of valid depth information or rich depth information, and the previous group of valid depth information or rich depth information is determined based on the previous group of second depth information; obtaining feature-level position information based on the image-level pose information, where the feature-level position information is position information obtained through feature alignment performed on a feature point in the second depth information based on a feature point in the previous group of valid depth information or rich depth information; and determining the pose of the mobile apparatus based on the feature-level position information.

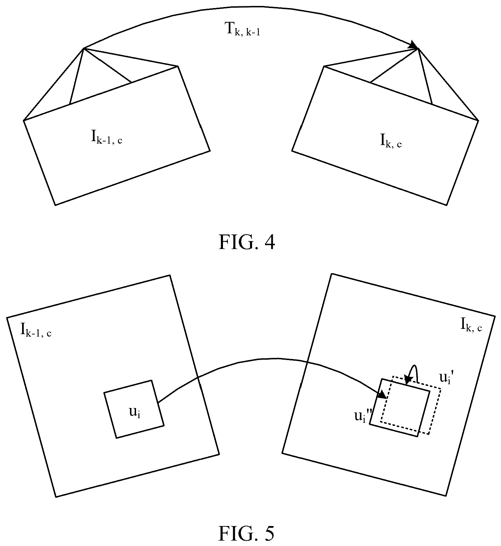

FIG. 4 is a diagram of image-level feature alignment according to an embodiment of this application.

For example, as shown in FIG. 4, $I_{k,c}$ may represent the second depth information, $I_{k-1,\,c}$ may represent the previous group of valid depth information or rich depth information of the second depth information, and $T_{k,\,k-1}$ may represent the image-level pose information, namely, the conversion information between the second depth information $I_{k,c}$ and the previous group of valid depth information or rich depth information $I_{k-1,\,c}$. In other words, when the second depth information $I_{k,c}$ is the key depth information, and the second depth information is the valid depth information or the rich depth information, the mobile apparatus may obtain the image-level pose information $T_{k,\,k-1}$ based on the second depth information $I_{k,c}$.

Optionally, $T_{k,k-1}$ may satisfy: $T_{k,k-1} = \arg\min_{T_{k,k-1}} \iint \left[ I_{k,c}\left( \pi\left( T\pi^{-1}\left( u, D_u \right) \right) \right) - I_{k-1,c}(u) \right] du$ (for ease of description, the formula is denoted as Formula 1).

In Formula 1, $\pi$ may represent a world coordinate-to-pixel coordinate symbol, $\pi^{-1}$ may represent a pixel coordinate-to-world coordinate symbol, u may represent position information (for example, pixel coordinates) of a feature point, $D_u$ may represent a depth value corresponding to u , and $\iint$ ...... du is a double integral symbol.

After obtaining the image-level pose information, the mobile apparatus may obtain the feature-level position information based on the image-level pose information.

It may be understood that, in an actual application scenario, when the first group of second depth information obtained through calculation each time the mobile apparatus is powered on is considered by default as the key depth information, if the first group of second depth information is the valid depth information or the rich depth information, a previous group of valid depth information or rich depth information of the first group of second depth information may be preset information. This is not limited in this application.

FIG. 5 is a diagram of feature-level alignment according to an embodiment of this application.

For example, as shown in FIG. 5, $I_{k,c}$ may represent the second depth information, $I_{k-1,\,c}$ may represent the previous group of valid depth information or rich depth information of the second depth information, $u_i'$ may represent position information of an $i^{th}$ feature point in $I_{k,c}$, $u_i$ may represent position information of a feature point, corresponding to the $i^{th}$ feature point in $I_{k,c}$, in $I_{k,c,\,c}$, and $u_i''$ may represent the feature-level position information, namely, position information obtained through feature alignment performed on the $i^{th}$ feature point in $I_{k,c}$ based on $u_i$. In other words, when the second depth information $I_{k,\,c}$ is the key depth information, and the second depth information is the valid depth information or the rich depth information, the mobile apparatus may obtain the feature-level position information $u_i''$ based on $T_{k,\,k-1}$, $u_i$, and $u_i'$.

Optionally, $u_i''$ may satisfy: $u_i'' = \arg\min_{u_i''} \frac{1}{2} \left\| P_{k,c}\left( u_i' \right) - T_{k,\,k-1} P_{k-1,c}\left( u_i \right) \right\|$ (for ease of description, the formula is denoted as Formula 2).

In Formula 2, $P_{k,c}(u_i')$ may represent a feature block that uses a feature point corresponding to $u_i'$ as a center in $I_{k,c}$, where the feature block may include N×N feature points, and N is an odd number greater than 0; $P_{k-1,\,c}(u_i)$ may represent a feature block that uses a feature point corresponding to $u_i$ as a center in $I_{k-1,\,c}$, where the feature block may also include N×N feature points; and $T_{k,\,k-1}$ may represent conversion information between $I_{k-1,\,c}$ and $I_{k,c}$, namely, the foregoing image-level pose information.

After obtaining the feature-level position information, the mobile apparatus may determine the pose information of the mobile apparatus based on the feature-level position information.

The mobile apparatus may obtain conversion information $T_{k,\,w}$ between a pixel coordinate system and a world coordinate system based on the feature-level position information, and then determine the pose of the mobile apparatus based on $T_{k,\,w}$.

Optionally, $T_{k,\,w}$ may satisfy: Tk, $T_{k,w} = \arg\min_{T_{k,w}} \sum_i \left\| u_i'' - \pi\left( T_{k,w} \cdot p_i^{3d} \right) \right\|$ (for ease of description, the formula is denoted as Formula 3).

In Formula 3, $u_i''$ may represent the feature-level position information, $\pi$ may represent a world coordinate-to-pixel coordinate symbol, and $p_i^{3d}$ may represent position information of a feature point, corresponding to $u_i''$, in a world coordinate system.

Based on $T_{k,w}$, it may be known that change information of the pose of the mobile apparatus is compared with that determined based on the previous group of second depth information, so that current pose information of the mobile apparatus can be obtained.

In a possible implementation, the mobile apparatus may further obtain third depth information, namely, the depth optimization information shown in FIG. 1, based on the feature-level position information $u_i''$ and the second depth information. It may be understood that compared with that of the second depth information, a depth value of a feature point included in the third depth information remains unchanged, but position information of the feature point changes from $u_i'$ to $u_i''$. As shown in FIG. 1, after obtaining the third depth information, the result optimization module 108 may feed back the third depth information to the feature enhancement module 104, so that the feature enhancement module 104 can more accurately calculate the second depth information subsequently. That is, as a quantity of iterations increases, the second depth information determined by the feature enhancement module 104 is closer to a real value. This helps further improve pose estimation accuracy.

In some embodiments, the method 200 may further include: when the second depth information is the key depth information, and the second depth information is the invalid depth information, increasing a frequency of detecting, by the single-line lidar, the physical space in which the mobile apparatus is located.

A ratio of a quantity of key feature points included in the invalid depth information to the total quantity of feature points is less than the second threshold. In other words, when the ratio of the quantity of key feature points included in the second depth information to the total quantity of feature points included in the second depth information is less than the second threshold, the second depth information may be determined as the invalid depth information. The key feature point is a feature point whose average value of a difference between pixel values of the feature point and a surrounding feature point is greater than or equal to the fourth threshold.

When the second depth information is the key depth information, and the second depth information is the invalid depth information, it may be considered that richness of sensing data obtained based on a current frequency of the 2D radar is insufficient, and analysis and processing based on the data may not reach expected pose estimation accuracy. In this case, the mobile apparatus may increase the frequency of detecting, by the 2D radar, the physical space in which the mobile apparatus is located, so that the 2D radar can obtain richer sensing data. This helps improve pose estimation accuracy.

In some embodiments, the method 200 may further include: when the second depth information is the key depth information, and the second depth information is the rich depth information, decreasing the frequency of detecting, by the single-line lidar, the physical space in which the mobile apparatus is located.

A ratio of a quantity of key feature points included in the rich depth information to the total quantity of feature points is greater than the third threshold. In other words, when the ratio of the quantity of key feature points included in the second depth information to the total quantity of feature points included in the second depth information is greater than the third threshold, the second depth information may be determined as the rich depth information. The key feature point is a feature point whose average value of a difference between pixel values of the feature point and a surrounding feature point is greater than or equal to the fourth threshold.

When the second depth information is the key depth information, and the second depth information is the rich depth information, it may be considered that richness of sensing data obtained based on a current frequency of the 2D radar is high, and analysis and processing based on the data can reach expected pose estimation accuracy. However, when the frequency of detecting, by the 2D radar, the physical space in which the mobile apparatus is located is excessively high, power consumption of the 2D radar is also high, and therefore power consumption of the mobile apparatus is increased. When high accuracy can be ensured, the frequency of detecting, by the 2D radar, the physical space in which the mobile apparatus is located may be appropriately decreased, thereby helping reduce power consumption of the mobile apparatus, and improve a battery life of the mobile apparatus.

Similar to adjusting the frequency of the 2D radar, in some possible implementations, when the second depth information is the key depth information, and the second depth information is the invalid depth information, the frequency of detecting, by the DVS, the physical space in which the mobile apparatus is located may also be increased; or when the second depth information is the key depth information, and the second depth information is the rich depth information, the frequency of detecting, by the DVS, the physical space in which the mobile apparatus is located may be decreased.

It should be understood that the key depth information, the valid depth information, the rich depth information, and the invalid depth information defined in this specification are merely used to distinguish between different depth information. Naming of the depth information is not limited in this application. In addition, the key depth information, the valid depth information, the rich depth information, and the invalid depth information that are described above with reference to the first threshold, the second threshold, the third threshold, and the fourth threshold are merely possible designs. A person skilled in the art may make a simple transformation based on a same concept to obtain other possible definitions of the key depth information, the valid depth information, the rich depth information, and the invalid depth information. Details are not described herein.

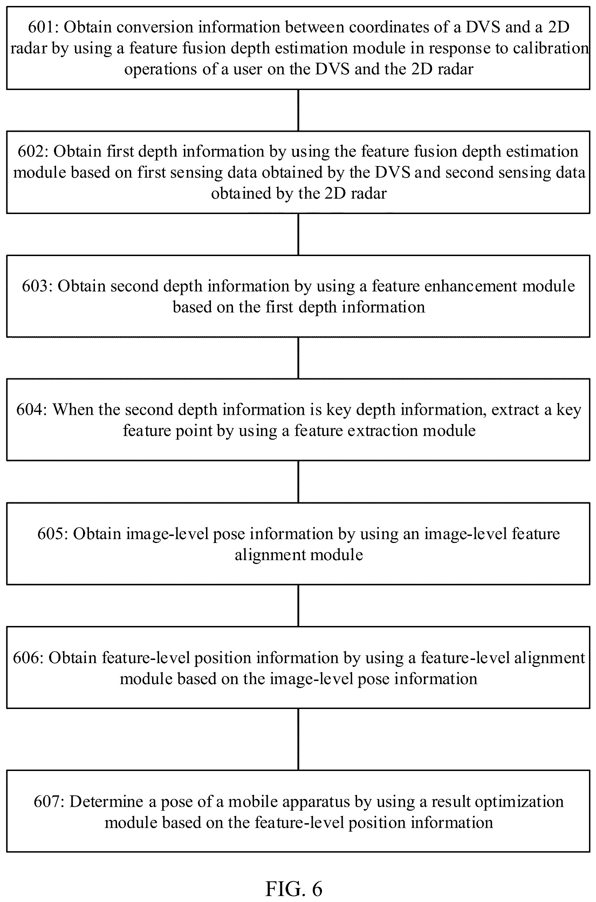

To better describe the pose estimation method provided in this application, the following further describes the pose estimation method provided in this application with reference to FIG. 1 and FIG. 6.

FIG. 6 is another schematic flowchart of a pose estimation method according to an embodiment of this application.

Step 601: Obtain conversion information between coordinates of a DVS and a 2D radar by using a feature fusion depth estimation module in response to calibration operations of a user on the DVS and the 2D radar.

A mobile apparatus may obtain the conversion information between the coordinates of the DVS and the 2D radar by using the feature fusion depth estimation module 103 shown in FIG. 1 in response to the calibration operations of the user on the DVS and the 2D radar. That is, the feature fusion depth estimation module 103 may be configured to obtain the conversion information between the coordinates of the DVS and the 2D radar in response to the calibration operations of the user on the DVS and the 2D radar.

Step 602: Obtain first depth information by using the feature fusion depth estimation module based on first sensing data obtained by the DVS and second sensing data obtained by the 2D radar.

The mobile apparatus may obtain the second sensing data by using the 2D radar 101 shown in FIG. 1, and obtain the first sensing data by using the DVS 102. The mobile apparatus may further obtain the first depth information through calculation by using the feature fusion depth estimation module 103 shown in FIG. 1 based on the first sensing data and the second sensing data and based on the conversion information that is between the coordinates of the DVS and the 2D radar and that is obtained in step 601. For detailed descriptions of the first depth information, refer to the foregoing related content. For brevity, details are not described herein again.

Step 603: Obtain second depth information by using a feature enhancement module based on the first depth information.

The mobile apparatus may perform feature enhancement on the first depth information by using the feature enhancement module 104 shown in FIG. 1 based on the first sensing data, to obtain the second depth information. For detailed descriptions, refer to the foregoing related descriptions. For brevity, details are not described herein again.

Step 604: When the second depth information is key depth information, extract a key feature point by using a feature extraction module.

The mobile apparatus may first determine, by using the feature extraction module 105 shown in FIG. 1, whether the second depth information is the key depth information; and when the second depth information is the key depth information, extract the key feature point. For detailed descriptions of determining whether the second depth information is the key depth information and extracting the key feature point (that is, determining the key feature point), refer to the foregoing related content. For brevity, details are not described herein again.

The mobile apparatus may further determine, by using the feature extraction module 105 based on a quantity of key feature points, a type corresponding to the second depth information. As described above, the type corresponding to the second depth information may include valid depth information, rich depth information, and invalid depth information. For detailed descriptions of the valid depth information, the rich depth information, and the invalid depth information, refer to the foregoing related content. For brevity, details are not described herein again.

Step 605: Obtain image-level pose information by using an image-level feature alignment module.

The mobile apparatus may obtain the image-level pose information by using the image-level feature alignment module 106 shown in FIG. 1 based on the second depth information when the second depth information is key depth information, and the second depth information is valid depth information or rich depth information. For detailed descriptions, refer to the foregoing related content. For brevity, details are not described herein again.

Step 606: Obtain feature-level position information by using a feature-level alignment module based on the image-level pose information.

The mobile apparatus may perform feature alignment based on the image-level pose information by using the feature-level alignment module 107 shown in FIG. 1, to obtain the feature-level position information. For detailed descriptions, refer to the foregoing related content. For brevity, details are not described herein again.

Step 607: Determine a pose of the mobile apparatus by using a result optimization module based on the feature-level position information.

The mobile apparatus may optimize conversion information between a world coordinate system and a pixel coordinate system by using the result optimization module 108 shown in FIG. 1 based on the feature-level position information, to determine the pose of the mobile apparatus. For detailed descriptions, refer to the foregoing related content. For brevity, details are not described herein again.

According to the foregoing solution, a characteristic that the radar is not affected by intensity of light in an environment and a characteristic that the DVS is good at capturing information about a dynamic change in the environment are used, and fusion and feature enhancement are performed on the sensing data obtained by using the DVS and the 2D radar, so that the sensing data obtained by using the DVS and the sensing data obtained by using the 2D radar complement each other; and even in a complex environment, pose estimation accuracy can be improved. In addition, the frequency of detecting, by the 2D radar and/or the DVS, the physical space in which the mobile apparatus is located may be further adjusted based on richness of the obtained sensing data. For example, when the richness of the obtained sensing data is insufficient, the frequency of detecting, by the 2D radar and/or the DVS, the physical space in which the mobile apparatus is located may be increased, to subsequently obtain richer sensing data, thereby helping achieve expected pose estimation accuracy. For another example, when the richness of the obtained sensing data is excessive, the frequency of detecting, by the 2D radar and/or the DVS, the physical space in which the mobile apparatus is located may be decreased, to reduce power consumption of the mobile apparatus, and improve a battery life of the mobile apparatus.

This application further provides a mobile apparatus. The mobile apparatus includes a DVS, a 2D radar, and a processor. The DVS and the 2D radar are configured to obtain sensing data, and the processor is configured to invoke and execute a computer program, so that the mobile apparatus performs the steps in any one of the embodiments in FIG. 2 or FIG. 6.

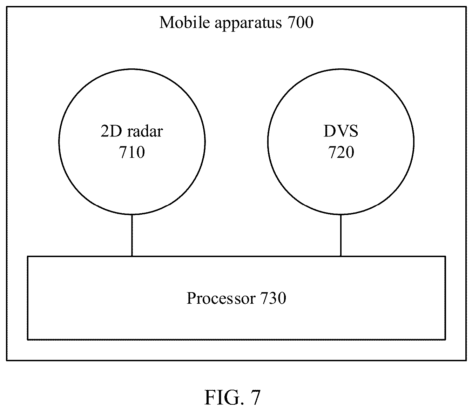

FIG. 7 is another block diagram of a mobile apparatus applicable to a pose estimation method according to an embodiment of this application.

The mobile apparatus 700 shown in FIG. 7 may include a 2D radar 710, a DVS 720, and a processor 730.

For example, the DVS 720 may be configured to detect physical space in which the mobile apparatus is located, to obtain first sensing data; the 2D radar 710 may be configured to detect the physical space in which the mobile apparatus is located, to obtain second sensing data; and the processor 730 may be configured to: perform feature enhancement on first depth information based on the first sensing data, to obtain second depth information, where the first depth information is obtained by fusing the first sensing data and the second sensing data; and determine a pose of the mobile apparatus 700 based on the second depth information.

For detailed description, refer to related descriptions of the steps in any one of the embodiments in FIG. 2 or FIG. 6.

In some possible implementations, the first depth information includes a plurality of depth values, and the processor 730 may be specifically configured to: determine a weight of each of the plurality of depth values based on the first sensing data; and perform feature enhancement on the plurality of depth values based on the weight of each of the plurality of depth values, to obtain the second depth information.

In some possible implementations, the first sensing data is one of one or more groups of first-type sensing data obtained by using the DVS 720 by detecting the physical space in which the mobile apparatus is located, and the second sensing data is one of one or more groups of second-type sensing data obtained by using the single-line lidar by detecting the physical space in which the mobile apparatus is located; and the processor 730 may be specifically configured to: when the second depth information is key depth information, and the second depth information is valid depth information or rich depth information, determine the pose of the mobile apparatus 700 based on the second depth information, where the key depth information is second depth information whose difference from a previous group of second depth information is greater than a first threshold, the previous group of second depth information is obtained by performing feature enhancement on a previous group of first depth information based on a previous group of first sensing data, the previous group of first depth information is obtained by fusing the previous group of first sensing data and a previous group of second sensing data, a ratio of a quantity of key feature points included in the valid depth information to a total quantity of feature points is greater than or equal to a second threshold and is less than or equal to a third threshold, a ratio of a quantity of key feature points included in the rich depth information to the total quantity of feature points is greater than the third threshold, and the key feature point is a feature point whose average value of a difference between pixel values of the key feature point and a surrounding feature point is greater than or equal to a fourth threshold.

In some possible implementations, the processor 730 may be specifically configured to: when the second depth information is the key depth information, and the second depth information is the valid depth information or the rich depth information, obtain image-level pose information based on the second depth information, where the image-level pose information is conversion information between the second depth information and a previous group of valid depth information or rich depth information, and the previous group of valid depth information or rich depth information is determined based on the previous group of second depth information; obtain feature-level position information based on the image-level pose information, where the feature-level position information is position information obtained through feature alignment performed on a feature point in the second depth information based on a feature point in the previous group of valid depth information or rich depth information; and determine the pose of the mobile apparatus 700 based on the feature-level position information.

In some possible implementations, the processor 730 may be further configured to: when the second depth information is the key depth information, and the second depth information is invalid depth information, send a first instruction to the 2D radar 710 and/or the DVS 720, where the first instruction indicates to increase a frequency of detecting the physical space in which the mobile apparatus 700 is located, a ratio of a quantity of key feature points included in the invalid depth information to the total quantity of feature points is less than the second threshold, and the key feature point is a feature point whose average value of a difference between pixel values of the key feature point and the surrounding feature point is greater than or equal to the fourth threshold.

In some possible implementations, the processor 730 may be further configured to: when the second depth information is the key depth information, and the second depth information is the invalid depth information, send a second instruction to the 2D radar 710 and/or the DVS 720, where the second instruction indicates to decrease the frequency of detecting the physical space in which the mobile apparatus 700 is located, the ratio of the quantity of key feature points included in the rich depth information to the total quantity of feature points is greater than the third threshold, and the key feature point is the feature point whose average value of the difference between the pixel values of the key feature point and the surrounding feature point is greater than or equal to the fourth threshold.

For detailed descriptions of the foregoing several possible implementations, refer to the foregoing related content. For brevity, details are not described herein again.

It should be understood that the mobile apparatus in this application may include but is not limited to a vehicle, a robot (for example, a floor-cleaning robot or a food delivery robot), and the like.

In a possible implementation, the mobile apparatus 700 may further include a memory, and the memory is configured to store a computer program invoked and executed by the processor 730.

Optionally, the processor 730 is coupled to the memory.

According to the foregoing solution, a characteristic that the radar is not affected by intensity of light in an environment and a characteristic that the DVS is good at capturing information about a dynamic change in the environment are used; and the mobile apparatus obtains the sensing data by using the DVS and the 2D radar, and performs fusion and feature enhancement on the sensing data obtained by using the DVS and the 2D radar, so that the sensing data obtained by using the DVS and the sensing data obtained by using the 2D radar complement each other; and even in a complex environment, pose estimation accuracy can be improved. In addition, the mobile apparatus may further adjust, based on richness of the obtained sensing data, the frequency of detecting, by the 2D radar and/or the DVS, the physical space in which the mobile apparatus is located. For example, when the richness of the obtained sensing data is insufficient, the frequency of detecting, by the 2D radar and/or the DVS, the physical space in which the mobile apparatus is located may be increased, to subsequently obtain richer sensing data, thereby helping achieve expected pose estimation accuracy. For another example, when the richness of the obtained sensing data is excessive, the frequency of detecting, by the 2D radar and/or the DVS, the physical space in which the mobile apparatus is located may be decreased, to reduce power consumption of the mobile apparatus, and improve a battery life of the mobile apparatus. In addition, the 2D radar is with lower costs than a multi-line lidar. Deploying the 2D radar on the mobile apparatus saves costs than deploying the multi-line lidar. Correspondingly, a market price of the mobile apparatus deployed with the 2D radar is lower. Therefore, the mobile apparatus deployed with the 2D radar may have a wider audience and broader applicability.

This application further provides a radar. The radar is configured to adjust, in response to a received frequency adjustment instruction, a frequency of detecting physical space in which the radar is located.

For example, the frequency adjustment instruction includes a first instruction and/or a second instruction. The radar may be configured to: after receiving the first instruction, increase, based on the first instruction, the frequency of detecting the physical space in which the radar is located; and/or after receiving the second instruction, decrease, based on the second instruction, the frequency of detecting the physical space in which the radar is located.

Optionally, the radar may be a single-line lidar or a multi-line lidar.

This application further provides a DVS. The DVS is configured to adjust, in response to a received frequency adjustment instruction, a frequency of detecting physical space in which the DVS is located.

For example, the frequency adjustment instruction includes a first instruction and/or a second instruction. The DVS may be configured to: after receiving the first instruction, increase, based on the first instruction, the frequency of detecting the physical space in which the DVS is located; and/or after receiving the second instruction, decrease, based on the second instruction, the frequency of detecting the physical space in which the DVS is located.

This application further provides a chip system. The chip system includes a processor, configured to implement functions in the steps of the mobile apparatus in any embodiment in FIG. 2 or FIG. 6.

In a possible design, the chip system further includes a memory. The memory is configured to store program instructions and data. The memory is located inside or outside the processor.

The chip system may include a chip, or may include a chip and another discrete component.

An embodiment of this application further provides a computer-readable storage medium. The computer-readable storage medium stores a computer program. When the computer program is executed by a computer, the computer is enabled to perform the steps of the mobile apparatus in any embodiment in FIG. 2 or FIG. 6.

An embodiment of this application further provides a computer program product. The computer program product includes a computer program. When the computer program is run, a computer is enabled to perform the steps of the mobile apparatus in any embodiment in FIG. 2 or FIG. 6.

It should be noted that the processor in embodiments of this application may be an integrated circuit chip, and has a signal processing capability. In an implementation process, steps in the foregoing method embodiments can be implemented through a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may represent computer-related entities, hardware, firmware, combinations of hardware and software, software, or software being executed.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the apparatus embodiments described above are merely examples. For example, division into the modules is merely logical function division. During actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one place, or may be distributed on a plurality of network modules. Some or all the modules may be selected based on actual requirements to achieve the objectives of the solutions in embodiments.

In addition, functional modules in embodiments of this application may be integrated into one processing module, or each of the modules may exist alone physically, or two or more units are integrated into one module.

In the foregoing embodiments, all or some of functions of the functional modules may be implemented by software, hardware, firmware, or any combination thereof. When the software is used to implement embodiments, all or some of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A pose estimation method, wherein the method comprises:

   obtaining first sensing data and second sensing data, wherein the first sensing data is obtained by using a dynamic vision sensor of a mobile apparatus by detecting physical space in which the mobile apparatus is located, and the second sensing data is obtained by using a single-line lidar of the mobile apparatus by detecting the physical space in which the mobile apparatus is located;
   performing feature enhancement on first depth information based on the first sensing data, to obtain second depth information, wherein the first depth information is obtained by fusing the first sensing data and the second sensing data; and
   determining a pose of the mobile apparatus based on the second depth information.

2. The method according to claim 1, wherein the first depth information comprises a plurality of depth values, and performing feature enhancement on the first depth information based on the first sensing data, to obtain the second depth information comprises:

   determining a weight of each of the plurality of depth values based on the first sensing data; and
   performing feature enhancement on the plurality of depth values based on the weight of each of the plurality of depth values, to obtain the second depth information.

3. The method according to claim 1 or 2, wherein the first sensing data is one of one or more groups of first-type sensing data obtained by using the dynamic vision sensor by detecting the physical space in which the mobile apparatus is located, and the second sensing data is one of one or more groups of second-type sensing data obtained by using the single-line lidar by detecting the physical space in which the mobile apparatus is located; and
   determining the pose of the mobile apparatus based on the second depth information comprises:

   when the second depth information is key depth information, and the second depth information is valid depth information or rich depth information, determining the pose of the mobile apparatus based on the second depth information, wherein
   the key depth information is second depth information whose difference from a previous group of second depth information is greater than a first threshold, the previous group of second depth information is obtained by performing feature enhancement on a previous group of first depth information based on a previous group of first sensing data, the previous group of first depth information is obtained by fusing the previous group of first sensing data and a previous group of second sensing data, a ratio of a quantity of key feature points comprised in the valid depth information to a total quantity of feature points is greater than or equal to a second threshold and is less than or equal to a third threshold, a ratio of a quantity of key feature points comprised in the rich depth information to the total quantity of feature points is greater than the third threshold, and the key feature point is a feature point whose average value of a difference between pixel values of the key feature point and a surrounding feature point is greater than or equal to a fourth threshold.

4. The method according to claim 3, wherein when the second depth information is the key depth information, and the second depth information is the valid depth information or the rich depth information, determining the pose of the mobile apparatus based on the second depth information comprises:

when the second depth information is the key depth information, and the second depth information is the valid depth information or the rich depth information, obtaining image-level pose information based on the second depth information, wherein the image-level pose information is conversion information between the second depth information and a previous group of valid depth information or rich depth information, and the previous group of valid depth information or rich depth information is determined based on the previous group of second depth information;
obtaining feature-level position information based on the image-level pose information, wherein the feature-level position information is position information obtained through feature alignment performed on a feature point in the second depth information based on a feature point in the previous group of valid depth information or rich depth information; and
determining the pose of the mobile apparatus based on the feature-level position information.

5. The method according to any one of claims 1 to 4, wherein the method further comprises:
when the second depth information is the key depth information, and the second depth information is invalid depth information, increasing a frequency of detecting, by the single-line lidar and/or the dynamic vision sensor, the physical space in which the mobile apparatus is located, wherein a ratio of a quantity of key feature points comprised in the invalid depth information to the total quantity of feature points is less than the second threshold, and the key feature point is a feature point whose average value of a difference between pixel values of the key feature point and the surrounding feature point is greater than or equal to the fourth threshold.

6. The method according to any one of claims 1 to 5, wherein the method further comprises:
when the second depth information is the key depth information, and the second depth information is the rich depth information, decreasing the frequency of detecting, by the single-line lidar and/or the dynamic vision sensor, the physical space in which the mobile apparatus is located, wherein the ratio of the quantity of key feature points comprised in the rich depth information to the total quantity of feature points is greater than the third threshold, and the key feature point is the feature point whose average value of the difference between the pixel values of the key feature point and the surrounding feature point is greater than or equal to the fourth threshold.

7. A mobile apparatus, comprising a dynamic vision sensor, a single-line lidar, and a processor, wherein

the dynamic vision sensor is configured to detect physical space in which the mobile apparatus is located, to obtain first sensing data;
the single-line lidar is configured to detect the physical space in which the mobile apparatus is located, to obtain second sensing data; and
the processor is configured to:

perform feature enhancement on first depth information based on the first sensing data, to obtain second depth information, wherein the first depth information is obtained by fusing the first sensing data and the second sensing data; and
determine a pose of the mobile apparatus based on the second depth information.

8. The apparatus according to claim 7, wherein the first depth information comprises a plurality of depth values, and the processor is specifically configured to:

determine a weight of each of the plurality of depth values based on the first sensing data; and
perform feature enhancement on the plurality of depth values based on the weight of each of the plurality of depth values, to obtain the second depth information.

9. The apparatus according to claim 7 or 8, wherein the first sensing data is one of one or more groups of first-type sensing data obtained by using the dynamic vision sensor by detecting the physical space in which the mobile apparatus is located, and the second sensing data is one of one or more groups of second-type sensing data obtained by using the single-line lidar by detecting the physical space in which the mobile apparatus is located; and
the processor is specifically configured to:

when the second depth information is key depth information, and the second depth information is valid depth information or rich depth information, determine the pose of the mobile apparatus based on the second depth information, wherein

the key depth information is second depth information whose difference from a previous group of second depth information is greater than a first threshold, the previous group of second depth information is obtained by performing feature enhancement on a previous group of first depth information based on a previous group of first sensing data, the previous group of first depth information is obtained by fusing the previous group of first sensing data and a previous group of second sensing data, a ratio of a quantity of key feature points comprised in the valid depth information to a total quantity of feature points is greater than or equal to a second threshold and is less than or equal to a third threshold, a ratio of a quantity of key feature points comprised in the rich depth information to the total quantity of feature points is greater than the third threshold, and the key feature point is a feature point whose average value of a difference between pixel values of the key feature point and a surrounding feature point is greater than or equal to a fourth threshold.

10. The apparatus according to claim 9, wherein the processor is specifically configured to:

when the second depth information is the key depth information, and the second depth information is the valid depth information or the rich depth information, obtain image-level pose information based on the second depth information, wherein the image-level pose information is conversion information between the second depth information and a previous group of valid depth information or rich depth information, and the previous group of valid depth information or rich depth information is determined based on the previous group of second depth information;

obtain feature-level position information based on the image-level pose information, wherein the feature-level position information is position information obtained through feature alignment performed on a feature point in the second depth information based on a feature point in the previous group of valid depth information or rich depth information; and

determine the pose of the mobile apparatus based on the feature-level position information.

11. The apparatus according to any one of claims 7 to 10, wherein the processor is further configured to:

when the second depth information is the key depth information, and the second depth information is invalid depth information, send a first instruction to the single-line lidar and/or the dynamic vision sensor, wherein the first instruction indicates to increase a frequency of detecting the physical space in which the mobile apparatus is located, a ratio of a quantity of key feature points comprised in the invalid depth information to the total quantity of feature points is less than the second threshold, and the key feature point is a feature point whose average value of a difference between pixel values of the key feature point and the surrounding feature point is greater than or equal to the fourth threshold.

12. The apparatus according to any one of claims 7 to 11, wherein the processor is further configured to:

when the second depth information is the key depth information, and the second depth information is the rich depth information, send a second instruction to the single-line lidar and/or the dynamic vision sensor, wherein the second instruction indicates to decrease the frequency of detecting the physical space in which the mobile apparatus is located, the ratio of the quantity of key feature points comprised in the rich depth information to the total quantity of feature points is greater than the third threshold, and the key feature point is the feature point whose average value of the difference between the pixel values of the key feature point and the surrounding feature point is greater than or equal to the fourth threshold.

13. A radar, wherein the radar is configured to:

after receiving a first instruction, increasing, based on the first instruction, a frequency of detecting physical space in which the radar is located; and/or

after receiving a second instruction, decreasing, based on the second instruction, the frequency of detecting the physical space in which the radar is located.

14. A dynamic vision sensor, wherein the dynamic vision sensor is configured to:

after receiving a first instruction, increasing, based on the first instruction, a frequency of detecting physical space in which the dynamic vision sensor is located; and/or

after receiving a second instruction, decreasing, based on the second instruction, the frequency of detecting the physical space in which the dynamic vision sensor is located.

**15.** A computer-readable storage medium, wherein the computer-readable storage medium stores a computer program, wherein when the computer program is executed, a computer is enabled to perform the method according to any one of claims 1 to 6.

**16.** A computer program product, comprising a computer program, wherein when the computer program is run, a computer is enabled to perform the method according to any one of claims 1 to 6.

EP 4 715 430 A1

FIG. 1

200

210: Obtain first sensing data and second sensing data

220: Perform feature enhancement on first depth information based on the first sensing data, to obtain second depth information, where the first depth information is obtained by fusing the first sensing data and the second sensing data

230: Determine a pose of a mobile apparatus based on the second depth information

FIG. 2

| Feature point 1 | Feature point 2 | | |
|---|---|---|---|
| Feature point 4 | Feature point 3 | Feature point 10 | Feature point 11 |
| Feature point 5 | Feature point 6 | Feature point 9 | Feature point 12 |
| Feature point 8 | Feature point 7 | Feature point 14 | Feature point 13 |

FIG. 3

$T_{k, k-1}$

$I_{k-1, c}$

$I_{k, c}$

FIG. 4

$I_{k-1, c}$

$I_{k, c}$

$u_i$

$u_i'$

$u_i''$

FIG. 5

601: Obtain conversion information between coordinates of a DVS and a 2D radar by using a feature fusion depth estimation module in response to calibration operations of a user on the DVS and the 2D radar

602: Obtain first depth information by using the feature fusion depth estimation module based on first sensing data obtained by the DVS and second sensing data obtained by the 2D radar

603: Obtain second depth information by using a feature enhancement module based on the first depth information

604: When the second depth information is key depth information, extract a key feature point by using a feature extraction module

605: Obtain image-level pose information by using an image-level feature alignment module

606: Obtain feature-level position information by using a feature-level alignment module based on the image-level pose information

607: Determine a pose of a mobile apparatus by using a result optimization module based on the feature-level position information

FIG. 6

Mobile apparatus 700

2D radar
710

DVS
720

Processor 730

FIG. 7

## INTERNATIONAL SEARCH REPORT

| International application No. |
| --- |
| **PCT/CN2024/076186** |

| A. | CLASSIFICATION OF SUBJECT MATTER |
| --- | --- |

G01S17/06(2006.01)i;  G01S17/88(2006.01)i

According to International Patent Classification (IPC) or to both national classification and IPC

| B. | FIELDS SEARCHED |
| --- | --- |

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNABS: CNTXT; VEN; ENTXT; ENTXTC; CJFD; CNKI; IEEE: 位姿, 估计, 动态视觉传感器, 事件相机, 硅视网膜, 神经形态视觉传感器, 雷达, 数据融合, 特征, 增强, 深度信息, 频率, 变化, 调节, posture, estimate, DVS, Lidar, radar, data fusion, feature enhancement, depth information, frequency, vary, adjust

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111537980 A (SUTENG INNOVATION TECHNOLOGY CO., LTD.) 14 August 2020 (2020-08-14)<br>description, paragraphs [0018]-[0112], and figures 1-11 | 13 |
| A | CN 114049542 A (TONGJI UNIVERSITY) 15 February 2022 (2022-02-15)<br>description, paragraphs [0060]-[0136], and figures 1-7 | 1-16 |
| A | CN 109842768 A (CELEPIXEL TECHNOLOGY CO., LTD.) 04 June 2019 (2019-06-04)<br>entire document | 1-16 |
| A | CN 111524194 A (JIANGSU SHENGHAI INTELLIGENT TECHNOLOGY CO., LTD.) 11 August 2020 (2020-08-11)<br>entire document | 1-16 |
| A | CN 114612348 A (JI HUA LABORATORY) 10 June 2022 (2022-06-10)<br>entire document | 1-16 |
| A | KR 20210022016 A (NAVER LABS CORP.) 02 March 2021 (2021-03-02)<br>entire document | 1-16 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 April 2024** | **04 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 715 430 A1**

**INTERNATIONAL SEARCH REPORT**

International application No.

**PCT/CN2024/076186**

**C.    DOCUMENTS CONSIDERED TO BE RELEVANT**

| Category* | Citation of document, with indication, where appropriate, of the relevant passages | Relevant to claim No. |
|---|---|---|
| A | US 2023066441 A1 (SHENZHEN PUDU TECH. CO., LTD.) 02 March 2023 (2023-03-02) entire document | 1-16 |

Form PCT/ISA/210 (second sheet) (July 2022)

27

## INTERNATIONAL SEARCH REPORT

| International application No. |
| --- |
| **PCT/CN2024/076186** |

| **Box No. III**      **Observations where unity of invention is lacking (Continuation of item 3 of first sheet)** |
| --- |

This International Searching Authority found multiple inventions in this international application, as follows:

Independent claim 1 and dependent claims 2-6 thereof relate to a method for pose estimation. Independent claim 7 and dependent claims 8-12 thereof relate to a mobile device. Independent claim 13 relates to a radar. Independent claim 14 relates to a dynamic vision sensor. Independent claim 15 relates to a computer-readable storage medium, which comprises the method for pose estimation of any one of claims 1-6. Independent claim 16 relates to a computer program product, which comprises the method for pose estimation of any one of claims 1-6.

The same or corresponding technical feature between independent claims 1, 7, 15 and 16 and independent claim 13 is a "radar", and the same or corresponding technical feature between independent claims 1, 7, 15 and 16 and independent claim 14 is a "dynamic vision sensor". However, the above-described same or corresponding technical features are both common general knowledge. Therefore, independent claims 1, 7, 15 and 16 and independent claims 13 and 14 do not have a same or corresponding special technical feature that defines a contribution which the inventions make over the prior art, do not have a technical relationship therebetween, do not belong to a single general inventive concept, and therefore do not comply with the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

                                   ☐ The additional search fees were accompanied by the applicant's protest but the applicable protest fee was not paid within the time limit specified in the invitation.

                                     ☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2024/076186**

| Patent document cited in search report | | | Publication date (day/month/year) | Patent family member(s) | | | Publication date (day/month/year) |
|---|---|---|---|---|---|---|---|
| CN | 111537980 | A | 14 August 2020 | None | | | |
| CN | 114049542 | A | 15 February 2022 | None | | | |
| CN | 109842768 | A | 04 June 2019 | None | | | |
| CN | 111524194 | A | 11 August 2020 | None | | | |
| CN | 114612348 | A | 10 June 2022 | None | | | |
| KR | 20210022016 | A | 02 March 2021 | KR | 102347239 | B1 | 04 January 2022 |
| US | 2023066441 | A1 | 02 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310659950